(19) Europäisches Patentamt
European Patent Office
Office européen des brevets

(11) **EP 1 616 366 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **04728508.5**

(22) Anmeldetag: **21.04.2004**

(51) Int Cl.:
*H01Q 1/32* (2006.01)     *B60R 11/02* (2006.01)

(86) Internationale Anmeldenummer:
**PCT/DE2004/000849**

(87) Internationale Veröffentlichungsnummer:
**WO 2004/095634 (04.11.2004 Gazette 2004/45)**

(54) **FAHRZEUG-MOBILFUNKHALTERUNG**

FIXTURE FOR MOBILE RADIO EQUIPMENT IN A VEHICLE

SUPPORT DE TERMINAL MOBILE POUR VEHICULE

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.04.2003 DE 10318296**

(43) Veröffentlichungstag der Anmeldung:
**18.01.2006 Patentblatt 2006/03**

(73) Patentinhaber: **Audioton Kabelwerk GmbH Zweigniederlassung Scheinfeld**
**91443 Scheinfeld (DE)**

(72) Erfinder:
• STRAUSS, Karsten
  74564 Crailsheim (DE)
• SCHLEGEL, Thomas
  90453 Nürnberg (DE)

(74) Vertreter: **Lelgemann, Karl-Heinz**
**Patentanwälte Spalthoff und Lelgemann,**
**Postfach 34 02 20**
**45074 Essen (DE)**

(56) Entgegenhaltungen:
WO-A-98/25323         WO-A-02/091516
DE-U- 9 311 242       DE-U- 29 723 679

**Beschreibung**

Die Erfindung betrifft eine Fahrzeug-Mobilfunkhalterung nach den Oberbegriff des Patentanspruchs 1.

Mobilfunkendgeräte sind heutzutage in vielerlei variierten Ausführungsformen erhältlich. Hierbei sind auch Modelle erhältlich, bei denen das Mobilfunkendgerät nicht mehr mit einer Antennenbuchse zum Anschluß einer externen Antenne ausgestattet sind. Um diese Mobilfunkendgeräte trotzdem mit einer externen Antenne betreiben zu können, sind Antennenkoppler bekannt, die eine kapazitive und/oder induktive Kopplung von HF-Signalen zwischen dem Antennenkoppler und der Antenne des Mobilfunkendgerätes ermöglichen.

In DE 100 37 241 A1 wird eine Handyhalterung zum Einbau in eine Fahrgastzelle eines Kraftfahrzeugs beschrieben, die an der Windschutzscheibe des Kraftfahrzeuges befestigt ist.

Die Handyhalterung ist mit einem Halterungsarm mit integrierter Antenne verbunden und weist eine am unteren Ende der Handyhalterung angeordnete Stabilisierungsvorrichtung auf, die das Mobilfunkendgerät in der Handyhalterung stabilisiert und festhält. Diese Stabilisierungsvorrichtung besteht beispielsweise aus einem Klemmbügel oder einem Permanentmagneten. Der Halterungsarm ist mittels einer Saugvorrichtung an der Windschutzscheibe des Kraftfahrzeuges befestigt. Die Handyhalterung weist weiter eine am oberen Ende der Handyhalterung angeordnete Koppelantenne auf, die bei eingelegtem Mobilfunkgerät eine kapazitive Kopplung des HF-Signals zwischen der Antenne des Mobilfunkgeräts und der Handyhalterung ermöglicht.

Weiter wird in DE 297 24 042 U1 ein Antennenverbinder zur Übertragung von HF-Signalen von einer Außenantenne zu einem drahtlosen tragbaren Telefon beschrieben. Der Antennenverbinder wird hierbei mittels eines Klett-Bandes an der Stummelantenne des drahtlosen tragbaren Telefons befestigt.

Der Antennenverbinder besteht aus einem Schaltelement und einem Masseelement. Das Schaltelement überträgt das HF-Signal kapazitiv und/oder induktiv von der Außenantenne zu der Hauptantenne des tragbaren Telefons. Das Schaltelement weist eine meanderförmige Schleife aus leitfähigem Material auf, die auf einem Träger aus nicht leitendem Material untergebracht ist. Das Massenelement ist mit der Masseebene des Telefons gekoppelt. Die meanderförmige Schleife wird neben die Hauptantenne des tragbaren Telefons angeordnet, wenn HF-Signale übertragen werden.

Die WO 98/25323 A zeigt eine Fahrzeug-Mobilfunkhalterung zur Befestigung eines Mobilfunkendgerätes in einem Fahrzeug, wobei die Fahrzeug-Mobilfunkhalterung ein Gehäuse mit einem zur Aufnahme eines Mobilfunkendgeräts ausgeformten ersten Gehäuseteil, eine elektrische Schnittstelle zum Anschluss einer externen Antenne an die Fahrzeug-Mobilfunkhalterung und eine mit der Schnittstelle elektrisch verbundene Koppelantenne zur berührungsfreien elektromagnetischen Kopplung von HF-Signalen zwischen der Koppelantenne und der Antenne des in die Fahrzeug-Mobilfunkhalterung eingelegten Mobilfunkendgeräts aufweist. Darüber hinaus gehört zu dieser bekannten Fahrzeug-Mobilfunkhalterung eine Grundplatte, die unterhalb des in die Fahrzeug-Mobilfunkhalterung eingelegten Mobilfunkendgeräts angeordnet ist.

Ausgehend von dem vorstehend geschilderten Stand der Technik liegt der Erfindung die Aufgabe zugrunde, eine verbesserte Fahrzeug-Mobilfunkhalterung für Mobilfunkendgeräte zu schaffen, die nicht mit einer Antennenbuchse ausgestattet sind.

Diese Aufgabe wird erfindungsgemäß durch eine Fahrzeug-Mobilfunkhalterung mit den im Patentanspruch 1 angegebenen Merkmalen gelöst.

Durch die Erfindung wird eine besonders verlustarme elektromagnetische Kopplung zwischen typischen internen Antennen von Mobilfunkendgeräten, die über eine ausgeprägte Richtcharakteristik verfügen und meist in zwei oder mehreren unterschiedlichen Frequenzbändern betrieben werden (Dual Band, Three Band), und externen Antennen erreicht. Weiter wird hierdurch der Anteil der Feldanteile des von der Antenne eines nicht mit einer Antennenbuchse ausgestatteten Mobilfunkendgerätes abgestrahlten elektromagnetischen Feldes reduziert, der in den Innenraum des Fahrzeuges vordringt. Die innerhalb eines Fahrzeuges durch ein derartiges Mobilfunkendgerät bewirkte Feldstärke wird somit zum einen dadurch reduziert, daß die elektromagnetische Kopplung zwischen der internen Antenne des Mobilfunkendgerätes und dem Antennenkoppler verbessert wird und zum anderen dadurch reduziert, daß der Anteil des von dem Mobilfunkendgerät erzeugten elektromagnetischen Feldes, der in den Innenraum vordringt, reduziert wird. Durch die Verbesserung der elektromagnetischen Kopplung ist das Mobilfunkendgerät nicht gezwungen, die Sendeleistung zu erhöhen, um eine ausreichende Übertragungsqualität sicher zu stellen.

So wird vermieden, daß es durch die abschirmende Wirkung der Fahrzeugkarosserie aufgrund von Resonanzeffekten zu deutlich höheren Feldstärken als im Freifeld, also außerhalb des Fahrzeuges kommt. Durch der absorbierenden Elemente wird zum einen die Feldstärke der in den Innenraum des Fahrzeuges dringenden Feldanteile reduziert und zum anderen die Abstimmbarkeit der Koppelantenne und damit der erzielbare Wirkungsgrad der Koppelantenne verbessert. So wird der Einfluß von wechselnden und nicht vorhersehbaren Umgebungsbedingungen auf die kapazitive und induktive Kopplung zwischen der Antenne des Mobilfunkendgerätes und der Koppelantenne verringert, so daß eine weitere Optimierung dieser Kopplung erreichbar ist.

eingekoppelt, wodurch sich aufgrund der oben beschriebenen Mechanismen insgesamt die in den Innenraum des Fahrzeuges vordringenden Feldanteile verringern. Eine besonders vorteilhafte Anordnung einer derartigen leitfähigen Schicht besteht darin, daß die leitfähige Schicht mindestens den Bedeckungsbereich der Koppelantenne abdeckt und/oder im wesentlichen senkrecht zur Hauptabstrahlrichtung der Antenne des eingelegten Mobilfunkendgerätes ausgerichtet ist. Untersuchungen haben gezeigt, daß mittels einer derartigen Anordnung besonders gute Ergebnisse erzielbar sind.

Weiter ist es zweckmäßig, als Reflexionselemente wirkende leitfähige Schichten seitlich des Antennenkopplers anzuordnen und damit seitlich, am Antennenkoppler vorbei abgestrahlte Feldanteile auf den Antennenkoppler zu bündeln.

Eine aus produktionstechnischer Sicht besonders kostengünstige und einfache Möglichkeit besteht hierbei darin, daß dem eingelegten Mobilfunkendgerät abgekehrte Gehäuseteile der Fahrzeug-Mobilfunkhalterung mit einer elektrisch leitfähigen Schicht beschichtet werden oder diese Gehäuseteile aus einem elektrisch leitfähigen Kunststoff hergestellt werden.

Gemäß einem bevorzugten Ausführungsbeispiel der Erfindung weist das Gehäuse der Fahrzeug-Mobilfunkhalterung ein Gehäuseteil auf, das das eingelegte Mobilfunkendgerät zusammen mit dem zur Aufnahme des Mobilfunkendgerätes ausgeformten Gehäuseteils zumindest teilweise umschließt und mit einer elektrisch leitfähigen Schicht beschichtet ist oder aus einem elektrisch leitfähigen Kunststoff besteht. Hierdurch wird erreicht, daß die aus der Vorderseite des Mobilfunkendgerätes austretenden Feldanteile auf die Koppelantenne reflektiert werden und so eingekoppelt werden können. Durch Kombination mit einem hinter der Koppelantenne angeordneten reflektierenden Element ist es weiter möglich, hierdurch eine stehende Welle zwischen zwei reflektierenden Elementen zu erzeugen, wodurch sich der Wirkungsgrad der Koppelantenne erhöhen läßt und sich damit die Koppeldämpfung weiter verringert.

Hierbei ist es zweckmäßig, das Gehäuseteil zumindest bereichsweise aus einem optisch transparenten Material oder Materialverbund herzustellen, so daß das Display des Mobilfunkendgerätes in eingelegtem Zustand lesbar bleibt. Um das Einlegen des Mobilfunkendgerätes in die Fahrzeug-Mobilfunkhalterung zu erleichtern, ist es vorteilhaft, dieses Gehäuseteil durch den Benutzer ablösbar mit dem zur Aufnahme des Mobilfunkendgerätes ausgeformten Gehäuseteil zu verbinden. Hierfür wird beispielsweise ein Verriegelungsmechanismus oder ein Verrasterungsmechanismus vorgesehen, mit Hilfe dessen die beiden Gehäuseteile lösbar verbindbar sind. Weiter ist es auch möglich, die beiden Gehäuseteile mittels Scharnieren miteinander zu verbinden.

Weiter ist es möglich, als absorbierendes Element ein oder mehrere elektromagnetische Strahlung absorbierende Absorberstrukturen vorzusehen, die vom eingelegten Mobilfunkendgerät aus betrachtet unterhalb der Koppelantenne und/oder seitlich der Koppelantenne angeordnet sind.

Weiter ist es zweckmäßig, derartige reflektierende Elemente und absorbierende Elemente in Kombination zu verwenden, und beispielsweise seitlich reflektierende Elemente und unterhalb des Antennenkopplers ein absorbierendes Element anzuordnen.

Der Wirkungsgrad der Absorberstrukturen läßt sich dadurch erhöhen, daß diese im wesentlichen senkrecht zur Hauptabstrahlrichtung der Antenne des eingelegten Mobilfunkendgerätes ausgerichtet sind.

Eine aus produktionstechnischer Sicht kostengünstige und besonders effektive Art und Weise der Anordnung von Absorberstrukturen besteht darin, Gehäuseteile der Fahrzeug-Mobilfunkhalterung, die die dem eingelegten Mobilfunkendgerät abgekehrte Seite des Gehäuses der Fahrzeug-Mobilfunkhalterung bilden, mindestens partiell mit einem Absorberstrukturen aufweisenden Schichtverbund zu versehen. Auf dieselbe Art und Weise können weitere Gehäuseteile der Fahrzeug-Mobilfunkhalterung zumindest partiell mit einem derartigen Schichtverbund versehen werden. Hierbei ist es auch möglich, diesen Schichtverbund durch eine entsprechende Wahl der Materialien zumindest teilweise transparent auszugestalten, so daß auch transparente Fenster in einem als Abdeckung wirkenden Gehäuseteil möglich sind.

Um den Wirkungsgrad des Antennenkopplers zu erhöhen, ist es vorteilhaft, die Koppelantenne im wesentlichen senkrecht zur Hauptabstrahlrichtung der Antenne des eingelegten Mobilfunkendgerätes auszurichten. Wie bereits oben beschrieben, verfügen die Antennen von Mobilfunkendgeräten, die mit keiner Anschlußbuchse zum Anschluß einer externen Antenne versehen sind, im Regelfall über eine starke Richtcharakteristik, so daß sich eine eindeutige Hauptabstrahlrichtung ergibt.

Als besonders vorteilhaft hat es sich hierbei erwiesen, Koppelantenne einzusetzen, die drei im wesentlichen parallel zueinander angeordnete und miteinander verkoppelte Leiter aufweisen, wobei die äußeren Leiter zu einer nicht ganz geschlossenen Schleife aus leitfähigem Material verbunden sind, die den mittleren Leiter umschließt. Weiter hat es sich als vorteilhaft gezeigt, Koppelantennen zu verwenden, die als zwei- oder mehrlagige Koppelstruktur mit zwei oder mehr übereinander angeordneten Teil-Koppelstrukturen ausgeformt sind. Auch diese Koppelantenne verfügen in der hier vorliegenden speziellen Umgebung über einen besonders hohen Wirkungsgrad.

Je höher der Wirkungsgrad der Koppelantenne ist, um so bessere Ergebnisse lassen sich durch den Einsatz von reflektiven und/oder absorbierenden Elementen erzielen, die von der Antenne des Mobilfunkendgerätes abgestrahlte und nicht in die Koppelantenne eingekoppelte elektromagnetische Strahlung reflektieren bzw. absorbieren, da sich hierdurch auch der Einfluß dieser Elemente auf die Abstimmung des Antennenkopplers verringert.

Im folgenden wird die Erfindung anhand von mehreren Ausführungsbeispielen unter Zuhilfenahme der beiliegenden Zeichnungen beispielhaft erläutert.

| Fig. 1 | zeigt eine schematische Darstellung einer erfindungsgemäßen Fahrzeug-Mobilfunkhalterung für ein erstes Ausführungsbeispiel der Erfindung. |
| Fig. 2a und Fig. 2b | zeigen zwei verschiedene Ansichten einer Koppelantenne zur Verwendung in der Fahrzeug-Mobilfunkhalterung nach Fig. 1. |
| Fig. 3 | zeigt eine schematische Darstellung einer erfindungsgemäßen Fahrzeug-Mobilfunkhalterung für ein zweites Ausführungsbeispiel der Erfindung. |
| Fig. 4a, 4b und 4c | zeigen Ansichten von Teil-Koppelstrukturen einer für die Fahrzeug-Mobilfunkhalterung nach Fig. 3 verwendbaren Koppelantenne. |
| Fig. 5 | zeigt einen Ausschnitt aus einer schematischen Schnittdarstellung einer Fahrzeug-Mobilfunkhalterung für ein drittes Ausführungsbeispiel der Erfindung. |
| Fig. 6a, 6b, 6c und 6d | zeigen verschiedene Absorberstrukturen zur Verwendung in Fahrzeug-Mobilfunkhalterungen nach den Fig. 1, 3, 5; 7a und 7b. |
| Fig. 7a | zeigt eine erste Ansicht einer erfindungsgemäßen Fahrzeug-Mobilfunkhalterung für ein viertes Ausführungsbeispiel der Erfindung. |
| Fig. 7b | zeigt eine zweite Ansicht der Fahrzeug-Mobilfunkhalterung nach Fig. 7a. |

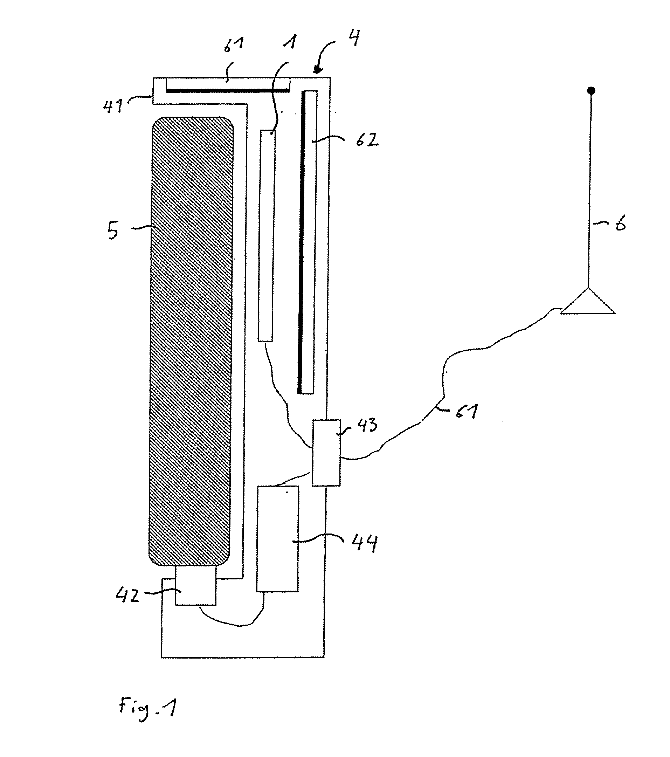

Fig. 1 zeigt ein Mobilfunkendgerät 5, eine Fahrzeug-Mobilfunkhalterung 4, eine externe Antenne 6 und ein Verbindungskabel 61.

Bei dem Mobilfunkendgerät 5 handelt es sich um ein GSM-Endgerät (GSM = Global System for Mobile Communication). Vorzugsweise handelt es sich bei dem Mobilfunkendgerät 5 hierbei um ein Mobilfunkendgerät, das über zwei oder mehr Frequenzbänder kommunizieren kann (2-Band, 3-Band). Weiter ist es auch möglich, daß das Mobilfunkendgerät 5 nach einem anderen Mobilfunkstandard arbeitet, es sich bei dem Mobilfunkendgerät 5 somit beispielsweise um ein UMTS-Endgerät (UMTS = Universal Mobile Telecommunications System) handelt.

Die Fahrzeug-Mobilfunkhalterung 4 ist so ausgebildet, das sie das wie oben beschriebene Mobilfunkendgerät mechanisch aufnehmen kann. So weist die Mobilfunkhalterung 4 ein Gehäuseteil 41 auf, das zur Aufnahme des Mobilfunkgerätes 5 ausgeformt ist und beispielsweise eine der Rückseite des Mobilfunkgerätes 5 entsprechende Vertiefung ausformt. Neben der rein mechanischen Aufnahme ist es vorteilhaft, daß die Fahrzeug-Mobilfunkhalterung 4 eine Haltevorrichtung aufweist, die das Mobilfunkendgerät 5 innerhalb der Fahrzeug-Mobilfunkhalterung 4 fixiert. Bei dieser Halterung kann es sich beispielsweise um einen Haltebügel, um einen Verriegelungsmechanismus oder um Elemente handeln, welche eine mechanische Klemmwirkung zwischen dem Gehäuse der Fahrzeug-Mobilfunkhalterung 4 und dem Gehäuse des Mobilfunkendgerätes 5 erzeugen.

Die Fahrzeug-Mobilfunkhalterung 5 weist ein elektrisches Anschlußelement 42 auf, das in eine Schnittstelle des Mobilfunkendgerätes 5 eingreift, wenn das Mobilfunkendgerät 5 in die Fahrzeug-Mobilfunkhalterung 4 bis zur Endstellung eingeführt ist. Bei dieser Schnittstelle kann es sich beispielsweise um eine elektrische oder optische Steuerschnittstelle und/oder um eine Schnittstelle zur externen Stromversorgung handeln.

Auf das elektrische Anschlußelement 42 könnte auch verzichtet werden.

Die Fahrzeug-Mobilfunkhalterung 4 weist weiter eine elektronische Schaltung 44, eine Koppelantenne 1, zwei reflektive Elemente 61 und 62 und ein elektrisches Anschlußelement 43 auf. Weiter ist die Fahrzeug-Mobilfunkhalterung so ausgestaltet, daß sie zum Einbau in Kraftfahrzeuge geeignet ist. Das Gehäuse der Fahrzeug-Mobilfunkhalterung 4 kann hierzu beispielsweise über entsprechende Aussparungen verfügen, mittels denen sie über Befestigungsmittel mit dem Kraftfahrzeug verbindbar ist. Sie kann so beispielsweise mittels Verschraubung oder Verrastung mit dem Kraftfahrzeug verbunden werden.

Die Koppelantenne 1 ist über eine Verbindungsleitung mit dem elektrischen Anschlußelement 43 verbunden. Bei dieser elektrischen Verbindungsleitung handelt es sich beispielsweise um ein Koaxialkabel. Bei dem Anschlußelement 43 kann es sich um eine einfache galvanische Verbindung oder um ein Steckerelement handeln, daß mit einem entsprechenden fahrzeugseitig angeordneten Steckerelement zusammenwirkt. Es ist jedoch auch möglich, auf das Anschlußelement 43 zu verzichten und das Anschlußkabel 61 direkt mit der Koppelantenne 1 zu verbinden.

Bei der externen Antenne 6 handelt es sich beispielsweise um die Außenantenne eines Kraftfahrzeugs. Es kann sich bei der externen Antenne 6 jedoch auch um eine innerhalb eines Kraftfahrzeugs angeordneten zweiten Antenne handeln, die beispielsweise im Bereich der Fensterfläche angebracht ist und damit in ihrem Abstrahlverhalten weniger von der Fahrzeugkarosserie beeinflußt wird.

Die elektrische Schaltung 44 erbringt die Funktion einer Freisprecheinrichtung und ist über das Anschlußelement 43 mit entsprechenden peripheren Komponenten (Mikrofon, Lautsprecher, Display, usw.) verbunden, die innerhalb des Fahrzeuges angeordnet sind. Auf die elektronische Schaltung 44 könnte natürlich auch verzichtet werden.

Die reflektiven Elemente 61 und 62 werden jeweils von einem Trägersubstrat und einer auf diesem Trägersubstrat vollflächig aufgebrachten Schicht aus einem leitfähigen Material, beispielsweise aus einem Metall, gebildet. Im einfachsten Fall handelt es sich bei den reflektiven Elementen 61 und 62 um eine dünne Trägerschicht aus einem FR4-Material, die mit einer dünnen Kupferschicht versehen ist. Bei den reflektiven Elementen 61 und 62 kann es sich jedoch auch um eine flexible Kunststofffolie handeln, die aus einem elektrisch leitfähigen Kunststoff besteht oder die mit einer dünnen, leitfähigen Schicht bedampft oder anderweitig beschichtet ist.

Wie in Fig. 1 gezeigt, ist das reflektive Element 62 im wesentlichen senkrecht zur Hauptabstrahlrichtung der Antenne des eingelegten Mobilfunkendgerätes 5 orientiert, vom eingelegten Mobilfunkendgerät 5 aus betrachtet unterhalb der Koppelantenne 1 angeordnet. Das reflektive Element 62 deckt hierbei, vom Mobilfunkendgerät 5 aus betrachtet, eine größere Fläche als die Koppelantenne 1 ab. Die von der Antenne des Mobilfunkendgerätes 5 in die Hauptabstrahlrichtung abgestrahlte und nicht in die Koppelantenne 1 eingekoppelte elektromagnetische Strahlung wird durch diese Anordnung des reflektiven Elements 62 zurück auf die Koppelantenne 1 reflektiert. Diese Feldanteile stehen damit erneut für eine Einkopplung zur Verfügung.

Das reflektive Element 61 ist seitlich der Koppelantenne 1 angeordnet. Durch die spezielle Ausgestaltung des Gehäuses der Fahrzeug-Mobilfunkhalterung 4 überdeckt das reflektive Element 61 die Stirnseite des Mobilfunkendgerätes 5 und kann damit einen großen Teil der nicht in die Hauptabstrahlrichtung abgestrahlten Feldbestandteile des von der Antenne des Mobilfunkendgerätes erzeugten elektromagnetischen Feldes zurück in Richtung der Koppelantenne 1 reflektieren. Damit stehen auch diese Feldbestandteile für eine Einkopplung in die Koppelantenne 1 zur Verfügung.

Die in Fig. 1 dargestellte Ausformung und Anordnung der reflektiven Elemente 61 und 62 kann natürlich auch variiert werden. So ist es beispielsweise auch möglich, auf eines der reflektiven Elemente 61 oder 62 zu verzichten oder weitere reflektive Elemente, beispielsweise auf der dem reflektiven Element 61 gegenüberliegenden Seite der Koppelantenne 1, anzuordnen. Weiter ist es auch möglich, die reflektiven Elemente nicht in planarer Form auszuformen, sondern gekrümmte Strukturen ähnlich eines Parabolspiegels vorzusehen, die die von der Antenne des Mobilfunkendgerätes 5 abgestrahlte elektromagnetische Strahlung auf die Koppelantenne 1 reflektieren.

Beim Einsatz von vollflächigen elektrisch leitfähigen Schichten als reflektierenden Elementen ist hierbei zu beachten, daß die Größe dieser Flächen sich im Bereich von 10 bis 15 mm befindet. Weiter ist es auch möglich, als reflektierende Elemente die Dipolstrukturen oder Monopol-Strukturen zu verwenden. Sie müssen hierbei folgenden Bedingungen genügen:

$$\text{Elektrische Länge} = \lambda \, / \, 4;$$

$\lambda$ = Nutzfrequenz.

Fig. 2a zeigt nun eine Ansicht einer Seite der Koppelantenne 1. In diesem Ausführungsbeispiel wird die Koppelantenne 1 von einem dünnen, nicht leitenden Substrat und von auf diesem Substrat aufgebrachten Bahnen und Flächen aus leitendem Material gebildet.

Der Antennenkoppler 1 weist so ein Substrat 11, ein von dem leitenden Material gebildete Koppelstruktur 14, einen von dem leitenden Material gebildeten Wellenleiter 12 und eine Schnittstelle 15 zum Anschluß der externen Antenne 6 auf.

Bei dem dünnen Substrat 11 handelt es sich vorzugsweise um eine Platine. Als Material für das Substrat 11 wird FR4-Material verwendet, daß eine Elektrizitätskonstante von 4,5 bis 4,6 hat. Weiter ist es auch möglich, als Substrat einen Keramikträger oder RT-Durit zu verwenden. Die Verwendung eines Keramikträgers bewirkt, daß die Größe der Koppelstruktur verändert werden kann. Die Dicke des dünnen Substrats beträgt 0,6 mm bis 1 mm.

Die Koppelstruktur 14 und der Wellenleiter 12 werden von leitendem Material gebildet, das auf dem Substrat 11 aufgebracht ist. Die Dicke dieser leitenden Schicht beträgt vorzugsweise 35 $\mu$m bis 70 $\mu$m, kann jedoch auch bedeutend dünner ausgebildet sein. Wie in Fig. 2a erkennbar, wird von dem leitenden Material auf dem Substrate 11 ein Oberflächenmuster gebildet, daß die Funktion des Wellenleiters 12 und der Koppelstruktur 14 erbringt. Als leitendes Material kommt hierbei insbesondere ein Metall, beispielsweise Kupfer in Frage. Es kann sich bei dem leitenden Material jedoch auch um einen leitenden Kunststoff handeln.

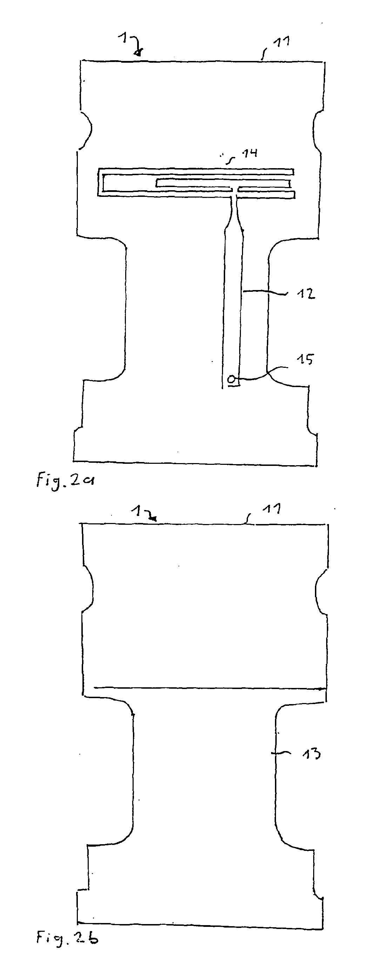

Fig. 2b zeigt nun die andere Seite des dünnen Substrats 11, also die Rückseite der in Fig. 2a dargestellten Seite des dünnen Substrats 11. Fig. 2b zeigt so erneut die Koppelantenne 1, das dünne Substrat 11 und im weiteren eine Massefläche 13. Wie in Fig. 2b erkennbar, nimmt die Massefläche den unteren Teil der Oberfläche des dünnen Substrates 11 ein. Die Massefläche 13 ist somit nicht im Bereich der Koppelstruktur 14 angeordnet. Die Massefläche 13 beginnt im Bereich des Wellenleiters 12. Die Form der Massefläche 13 kann hierbei variiert werden. Beispielsweise ist es auch möglich, daß die Massefläche auch im oberen Teil des dünnen Substrats angeordnet ist, sofern sie den Bereich der Koppelstruktur 14 ausspart. Weiter kann die Massefläche 13 den unteren Bereich des dünnen Substrats auch nur partiell abdecken. Hierbei ist es jedoch wesentlich, daß die Massenfläche im Bereich des Wellenleiters 12 vorhanden ist.

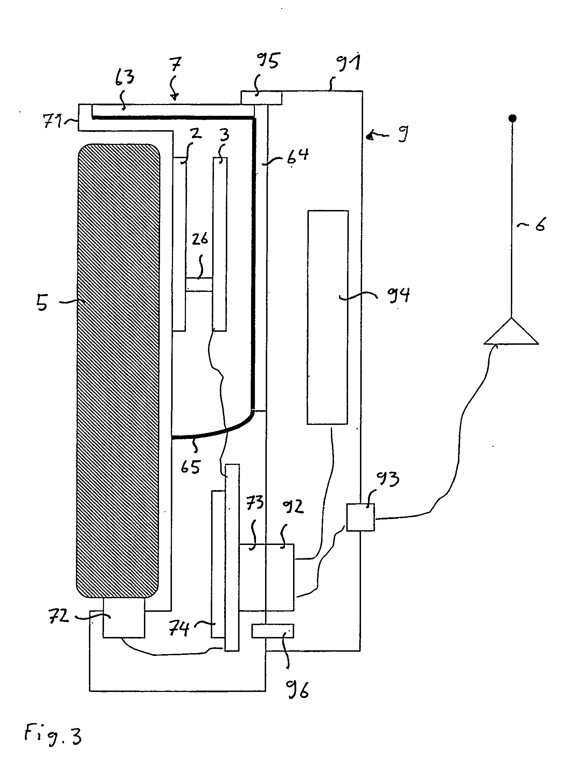

Fig. 3 zeigt eine erfindungsgemäße Fahrzeug-Mobilfunkhalterung, die aus einer an das Mobilfunkendgerät 5 angepaßten Haltevorrichtung 7 und aus einem Grundteil 9 besteht. Die Haltevorrichtung 7 weist ein Gehäuse 71, ein elektrisches Anschlußelement 72, eine elektronische Schaltung 74, ein aus zwei Teil-Koppelstrukturen 2 und 3 bestehende Koppelantenne, drei reflektierende Elemente 63, 64 und 65 und ein elektrisches Anschlußelement 73 auf.

Das zum Mobilfunkendgerät 5 hin orientierte Gehäuseteil des Gehäuses 71 ist zur Aufnahme des Mobilfunkendgerätes 5 ausgeformt und weist somit beispielsweise eine der Kontur der Rückseite des Mobilfunkendgerätes 5 entsprechende Vertiefung auf.

Die elektrischen Anschlußelemente 72 und 73 sowie die elektronische Schaltung 74 sind wie die Anschlußelemente 42 und 43 bzw. die elektronische Schaltung 44 nach Fig. 1 ausgestaltet.

Weiter sind die reflektiven Elemente 63, 64 und 65 wie die reflektiven Elemente 61 und 62 nach Fig. 1 aufgebaut. Bei den reflektiven Elementen 63 und 64 handelt es sich jeweils um einen Schichtverbund aus einem Trägersubstrat und einer auf diesem Trägersubstrat aufgebrachten dünnen, leitfähigen Schicht. Bei dem reflektiven Element 65 handelt es sich um ein dünnes Substrat aus einem leitfähigen Material, beispielsweise aus einem leitfähigen Kunststoff. Wie in Fig. 3 dargestellt, sind die reflektiven Elemente 63, 64 und 65 im Vergleich zu den reflektiven Elementen 61 und 62 nach Fig. 1 innerhalb des Gehäuses 71 anders angeordnet, so dass die Koppelantenne im Bereich der Rückseite des Mobilfunkendgerätes 5 vollflächig von reflektiven Elementen umschlossen ist.

Das Grundteil 9 weist ein Gehäuse 91, eine in dem Gehäuse 91 angeordnete elektronische Schaltung 94, zwei elektrische Anschlußelemente 92 und 93 und Verriegelungselemente 95 und 96 auf.

Das Gehäuse 91 weist Ausnehmungen auf, mittels denen das Gehäuse 91 mit dem Fahrzeug verbbindbar ist. Die Verriegelungselemente 95 und 96 stellen eine lösbare mechanische Verbindung zwischen dem Grundteil 9 und der Haltevorrichtung 7 her. Neben dem Einsatz von Verriegelungselementen ist es auch möglich, eine derartige Verbindung durch eine Verrasterung des Grundteils 9 mit der Haltevorrichtung 7 zu erreichen. Das elektrische Anschlußelement 92 stellt ein elektrisches Steckelement dar, das komplementär zu dem zugeordneten Steckerelement der Haltevorrichtung 7, dem elektrischen Anschlußelement 73, ausgeformt und angeordnet ist. Die elektronische Schaltung 94 erbringt beispielsweise die Funktion einer Freisprecheinrichtung oder eines Navigationssystems. Auf die elektronische Schaltung 94 könnte natürlich auch verzichtet werden. Die externe Antenne 6 ist über die elektrischen Anschlußelemente 93, 92, 73 und die elektronische Schaltung 74 mit der von den Teil-Koppelstrukturen 2 und 3 gebildeten Koppelantenne verbunden.

Die Teil-Koppelstrukturen 2 und 3 bestehen jeweils aus einem leitfähigen Material, das auf einer Seite eines dünnen Trägersubstrats, insbesondere einer Platine aufgebracht ist. Auf das Trägersubstrat kann hierbei auch verzichtet werden, wenn die Teil-Koppelstruktur aus einem leitfähigen Material in einer Dicke ausgeführt sind, die über genügend mechanische Stabilität verfügt.

Die zwei Teil-Koppelstrukturen 2 und 3 sind in wesentlich parallel zueinander liegenden Ebenen und etwa 3,5 mm voneinander beabstandet angeordnet. Der Abstand zwischen den Teil-Koppelstrukturen 2 und 3 kann hierbei abhängig von dem einzulegenden Mobilfunkendgerät und den Dielektrizität-Konstanten der verwendeten Trägermaterialien sowie des Abstandes zwischen der Teil-Koppelstruktur 2 und der Antenne des Mobilfunkendgerätes 5 variiert werden. Messungen haben gezeigt, daß die Teil-Koppelstrukturen 2 und 3 vorzugsweise mehr als 3 mm voneinander beabstandet anzuordnen sind.

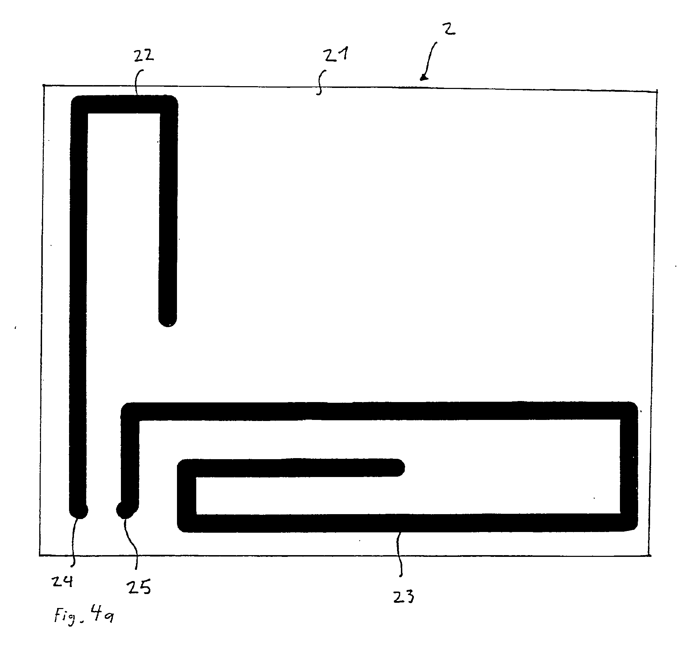

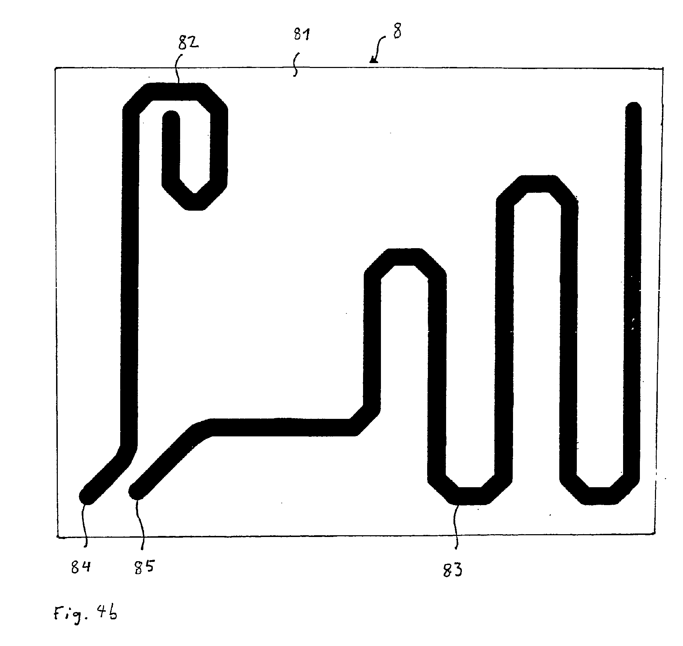

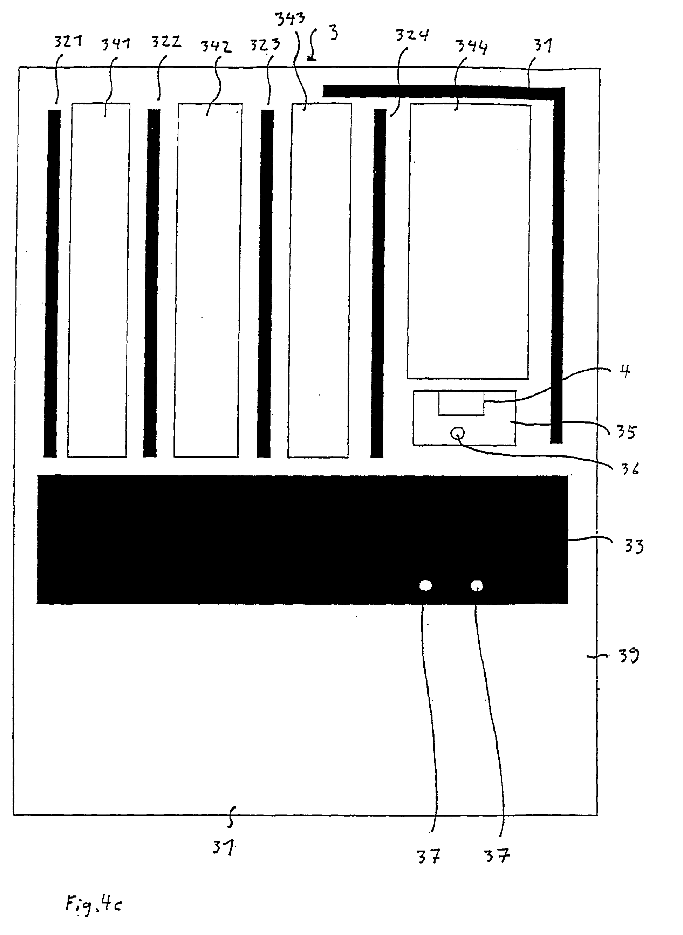

Zwei bevorzugte Ausführungsformen der Teil-Koppelstruktur 2 sind in den Fig. 4a und 4b gezeigt. Eine bevorzugte Ausführungsform der Teil-Koppelstruktur 3 ist in Fig. 4c gezeigt. Die beiden Teil-Koppelstrukturen 2 und 3 sind hierbei mittels eines elektrischen Verbindungselementes 26 miteinander verbunden.

Das elektrische Verbindungselement stellt hierbei eine ein- oder mehradrige elektrische Verbindung zwischen den Teil-Koppelstrukturen 2 und 3 her.

Fig. 4a zeigt eine Ansicht einer Seite der Teil-Koppelstruktur 2. In diesem Ausführungsbeispiel wird die Teil-Koppelstruktur von einem dünnen, nicht leitfähigen Substrat und von auf diesem Substrat aufgebrachten Teilstrukturen aus leitfähigem Material gebildet. Die Teil-Koppelstruktur 2 weist so einen Dielektrizitätskörper 21 und zwei von dem leitfähigen Material gebildete Teilstrukturen 22 und 23 mit zwei Koppelpunkten 24 und 25 auf. Bezüglich der für den Dielektrizitätskörper 21 und für die Teilstrukturen verwendeten Materialien wird auf die Ausführungen zu den Figuren Fig. 2a und Fig. 2b verwiesen.

Die Teilstrukturen 22 und 23 sind, wie in Fig. 2 gezeigt, unterschiedlich ausgeformt und für unterschiedliche Wellenlängenbereiche bestimmt. Die Teilstruktur 22 ist für das 1800 MHz-Band bestimmt. Die Teilstruktur 23 ist für das 900 MHz-Band bestimmt. Wie in Fig. 4a gezeigt, ist die Teilstruktur 22 horizontal orientiert und die Teilstruktur 23 vertikal orientiert. Die Teilkoppelstruktur 22 ist hierbei in der Form einer nicht ganz geschlossenen Schleife ausgeführt, deren Länge etwa 14 mm beträgt und deren Breite in etwa 5 mm beträgt. Die Breite der Leiterbahn, aus der die Teilkoppelstruktur 22 geformt ist, beträgt in etwa 1 mm. Die Teilkoppelstruktur 23 hat längsgestreckte Spiralform. Die Länge der so gebildeten Spirale beträgt in etwa 25 mm und die Breite in etwa 8mm.

Eine alternative Ausformung der Teilkoppelstrukturen 22 und 23 ist in Fig. 4b gezeigt.

Fig. 4b zeigt eine Teilkoppelstruktur 8, die aus Teilstrukturen 82 und 83 aus einem dünnen leitfähigen Material und einem Dielektrizitätskörper 81 besteht.

Die Teilstrukturen 82 und 83 sind unterschiedlich ausgeformt, wobei die Teilstruktur 82 für das 1800 MHz-Band und die Teilstruktur 83 für 900 MHz-Band bestimmt ist. Auch die beiden Teilstrukturen 82 und 83.sind unterschiedlich orientiert. So ist die Teilstruktur 82 vertikal und die Teilkoppelstruktur 83 horizontal orientiert. Die Teilstruktur 82 hat eine Spiralform. Die Teilstruktur 83 hat eine meanderförmige Form.

Es ist natürlich möglich, daß die Teilstrukturen 22, 23, 82 und 83 in ihren Abmessungen verändert werden, um sie an die von dem Mobilfunkendgerät 5 verwendeten Frequenzbänder, an die Dielektrizitätskonstante der verwendeten Dielektrizitätskörper und an ihre Beabstandung von der Antenne des Mobilfunkendgerätes 5 anzupassen. Weiter ist es auch möglich, die Teilstrukturen 22 und 82 oder 23 und 83 gegenseitig auszutauschen oder bereits innerhalb der möglichen Teilkoppelstrukturen miteinander zu verkoppeln.

Fig. 4c zeigt die Teilkoppelstruktur 3, die von einem Dielektrizitätskörper 39 und mehreren aus einem dem elektrisch leitfähigen Material bestehenden Teilstrukturen 321 bis 324, 31 und 33 gebildet wird. Die Teilstrukturen 321, 322, 323, 324 und 31 sind mittels Kondensatoren mit der Teilstruktur 33 verbindbar. Auf diese Weise ist eine Abstimmung der Koppelantenne auf das jeweilige Mobilfunkendgerät möglich. Beispielsweise sind so die Teilstrukturen 321 und 31 über Kondensatoren (in Fig. 4c nicht gezeigt) mit der Teilstruktur 33 verbunden. Zwischen den Teilstrukturen 321 bis 324, 31 und 33 sind Fräsungen 341, 342, 343 und 344 vorgesehen. Derartige Innenfräsungen können auch auf den Dielektrizitätskörpern 21 und 81 ausgeformt sein. Weiter weist der Dielektrizitätskörper 31 einen Combiner 35 auf, der mit dem elektrischen Verbindungselement 26 verbunden ist. Der Combiner 35 dient der Verkoppelung der Teilstrukturen 24 und 25 bzw. 84 und 85 der Figuren 4a und 4b. Der Combiner 35 verkoppelt hierbei die Teilstrukturen mittels Kondensatoren oder Spulen auf einen Koppelpunkt 36.

Weiter weist die Teilstruktur 33 einen oder mehrere Koppelpunkte 37 auf. Der Innenleiter des Antennenkabels wird nun mit dem Koppelpunkt 36 und der Außenleiter des Antennenkabels mit den Koppelpunkten 37 verbunden.

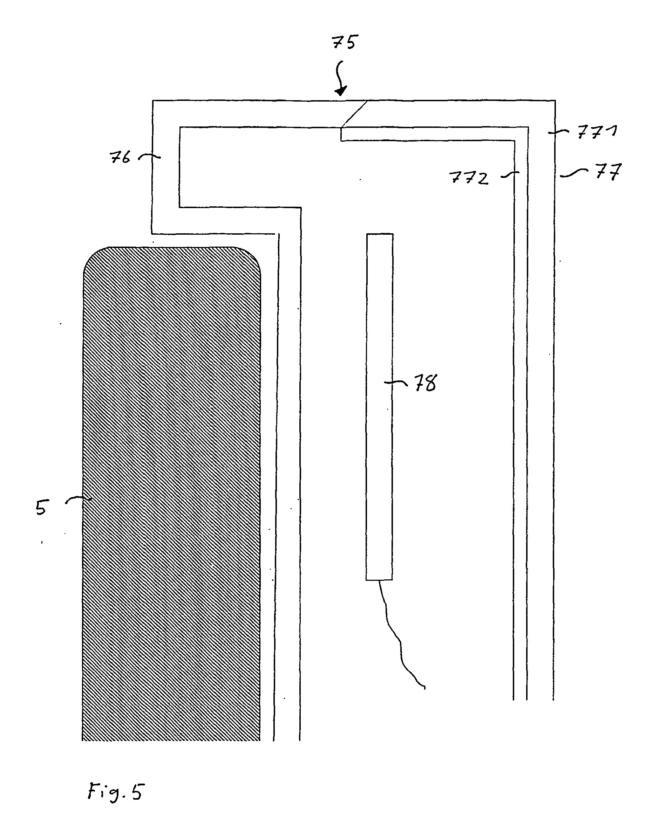

Fig. 5 zeigt einen Schnitt durch eine Fahrzeug-Mobilfunkhalterung 75, in die das Mobilfunkendgerät 5 eingelegt ist. Die Fahrzeug-Mobilfunkhalterung 75 weist ein Gehäuse auf, das sich aus zwei oder mehr Gehäuseteilen zusammensetzt. Von diesen Gehäuseteilen sind in Fig. 5 zwei Gehäuseteile 76 und 77 gezeigt.

Das Gehäuseteil 76 ist zur Aufnahme des Mobilfunkendgerätes 5 ausgeformt und bildet somit beispielsweise bereichsweise die äußere Formgebung des Mobilfunkendgerätes 5 nach. Das Gehäuseteil 76 besteht hierbei aus einem Kunststoff-Spritzgußteil. Das Gehäuseteil 77 bildet die dem eingelegten Mobilfunkendgerät 5 abgekehrte Seite des Gehäuses der Fahrzeug-Mobilfunkhalterung 75. Das Gehäuseteil 77 ist ebenso aus einem Spritzgußteil 771 gefertigt, das jedoch mit einer dünnen leitfähigen Schicht 772 beschichtet ist. Bei der Schicht 771 handelt es sich um eine dünne metallische Schicht, die mittels eines Beschichtungsprozesses auf das Kunststoffspritzgußteil 771 aufgebracht ist. Wie in Fig. 5 gezeigt, ist hierbei die Innenseite des Kunststoff-Spritzgußteiles 771 vollflächig mit der dünnen leitfähigen Schicht 772 beschichtet. Es ist natürlich auch möglich, daß die Außenseite des Kunststoff-Spritzgußteiles 71 mit der leitfähigen Schicht 772 beschichtet ist und/oder daß die dünne leitfähige Schicht 772 nur bereichsweise auf das Kunststoff-Spritzgußteil 771 aufgebracht ist.

Die dünne leitfähige Schicht 772 wirkt hierbei als reflektives Element, wie dies bereits für die reflektiven Elemente 61, 62, 63, 64 und 65 nach den Figuren Fig. 1 und Fig. 3 beschrieben ist. Im Bezug auf die Kombinationsmöglichkeiten und auf die Ausführung einer lediglich bereichsweisen Aufbringung der leitfähigen Schicht 772 auf das Kunststoff-Spritzgußteil 771 wird auf die Ausführungen zu den Figuren Fig. 1 und Fig. 3 verwiesen.

Innerhalb des von den Gehäuseteilen 76 und 77 umschlossenen Raumes ist eine Koppelantenne 78 angeordnet. Es ist weiter möglich, daß die Koppelantenne 78 auf der Außen- oder der Innenseite des Gehäuseteils 76 aufgebracht ist, beispielsweise in dem Bereich der Hauptabstrahlrichtung des Mobilfunkendgerätes 5 auf das Gehäuseteil 76 aufgeklebt ist.

Wie bereits oben beschrieben, ist neben dem Einsatz von reflektiven Elementen auch der Einsatz von absorbierenden Elementen möglich. Als absorbierende Elemente können zum einen elektromagnetische Strahlung absorbierende Schaumstoffe verwendet werden.

Weiter ist der Einsatz von Absorberstrukturen als absorbierende Elemente möglich.

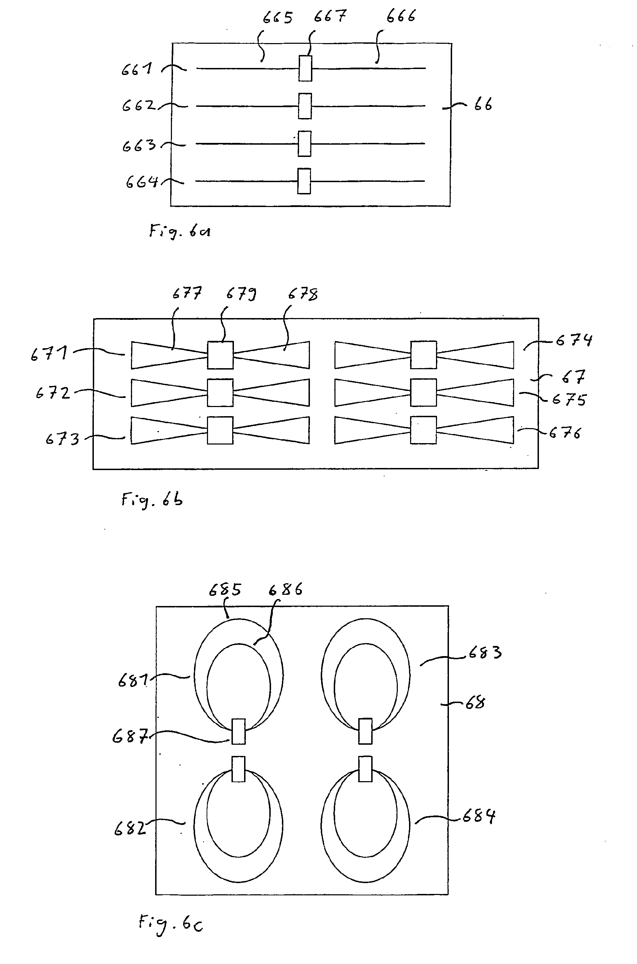

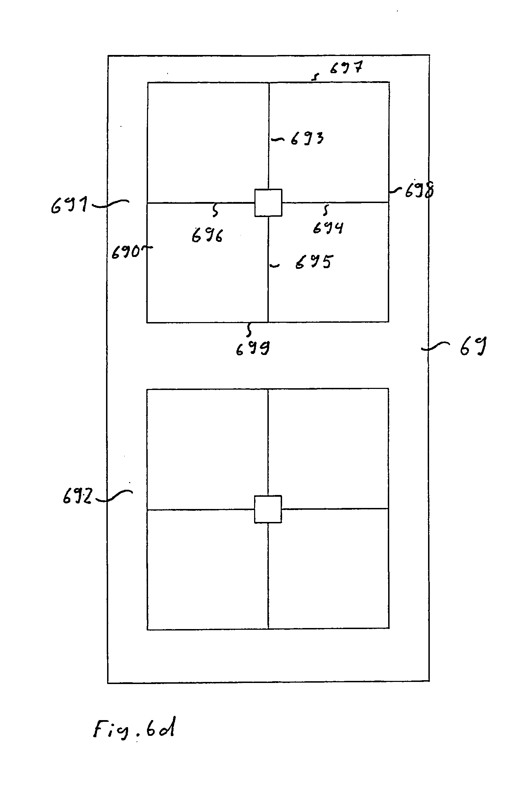

Die Figuren 6a bis 6d zeigen nun mehrere Möglichkeiten, wie derartige Absorberstrukturen realisiert werden können.

Fig. 6a zeigt eine Absorberstruktur 66, die aus mehreren gleichartig aufgebauten Teilstrukturen 661 bis 664 besteht.

Der Aufbau der Teilstrukturen 661 bis 664 wird nun beispielhaft am Aufbau der Teilstruktur 661 beschrieben:

Die Teilstruktur 661 weist zwei Leiter 665 und 666 aus einem leitfähigen Material auf, die auf einem dünnen Substrat aufgebracht sind. Die beiden elektrischen Leiter 665 und 666 sind über einen Absorber 667 verbunden, der beispielsweise von einem Widerstand gebildet wird. Die elektrischen Leiter 65 und 66 haben hierbei vorzugsweise jeweils eine Länge von 10 bis 15 mm.

Fig. 6b zeigt eine Absorberstruktur 67, die ebenfalls aus einer Vielzahl von gleichartig aufgebauten Teilstrukturen 671 bis 676 aufgebaut ist. Wie in Fig. 6b gezeigt, werden diese Teilstrukturen von zwei jeweils in Form eines Dreiecks angeordneten Leitern 677, 678 gebildet, die über einen Absorber 679 verbunden sind.

Fig. 6c zeigt eine Absorberstruktur 68, die von vier Teilstrukturen 681 bis 684 gebildet wird. Die Teilstrukturen weisen jeweils zwei in Form eines Ovals angeordneten Leiter 685 und 686 auf, die über einen Absorber 687 verbunden sind.

Fig. 6 d zeigt eine Absorberstruktur 69, die von zwei Teilstrukturen 691 und 692 gebildet wird. Die Teilstrukturen weisen jeweils netzartig angeordnete Leiter 693 bis 699 und 690 auf, die über einen Absorber miteinander verbunden sind. Natürlich ist es auch möglich, Absorberstrukturen zu verwenden, die aus einer Kombination von verschiedenen der in den Figuren Fig. 6a bis Fig. 6d gezeigten Teilstrukturen zusammengesetzt sind.

Die absorbierenden Elemente können hierbei anstelle der reflektiven Elemente 61, 62, 63, 64, 65 und 772 nach den Figuren Fig. 1, Fig. 3 und Fig. 5 eingesetzt werden. Eine Kombination von reflektiven Elementen und absorbierenden Elementen ist möglich. Als Trägersubstrat für die absorbierenden Strukturen 66 bis 69 kann auch ein flexibles Kohlenstoffmaterial verwendet werden, das sodann in der gewünschten Form in das Gehäuse der Fahrzeug-Mobilfunkhalterung eingelegt wird.

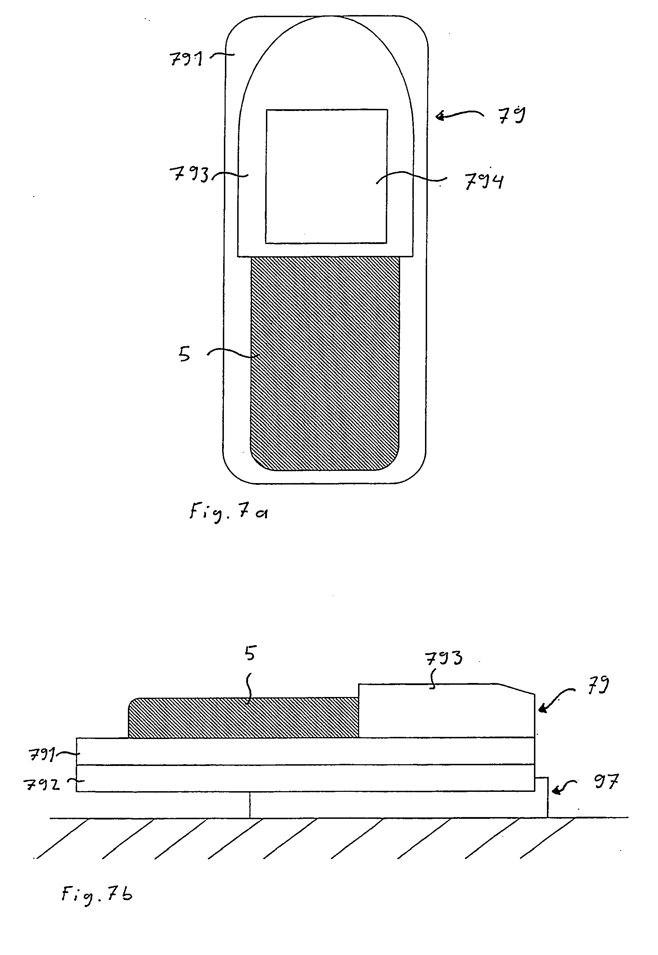

Fig. 7a und Fig. 7b zeigen zwei verschiedene Ansichten einer Fahrzeug-Mobilfunkhalterung 79, in die das Mobilfunkendgerät 5 eingelegt ist. Die Fahrzeug-Mobilfunkhalterung 79 weist drei Gehäuseteile 791, 792 und 793 auf und ist mittels einer Grundplatte 97 lösbar mit dem Fahrzeug verbunden.

Das Gehäuseteil 791 ist, wie in Fig. 7b gezeigt, zur Aufnahme des Mobilfunkendgerätes 5 ausgeformt. Das Gehäuseteil 792 ist wie das Gehäusesteil 77 nach Fig. 5 mit einer innen liegenden Schicht aus einem elektrisch leitfähigen Material beschichtet. Innerhalb des von den Gehäuseteilen 791 und 792 gebildeten Hohlraums ist in Höhe der Hauptabstrahlrichtung des eingelegten Mobilfunkendgerätes 5 eine Koppelantenne angeordnet.

Wenn das Mobilfunkendgerät 5 in die Fahrzeug-Mobilfunkhalterung 79 eingelegt ist, umschließt das Gehäuseteil 793 zusammen mit dem Gehäuseteil 791 den oberen Teil des Mobilfunkendgerätes 5. Das Gehäuseteil 793 ist hierbei zumindest bereichsweise mit einer elektrisch leitfähigen Schicht beschichtet oder besteht aus einem elektrisch leitfähigen Kunststoff. Hierzu wird auch auf die Ausführungen zu dem Gehäuseteil 77 nach Fig. 5 verwiesen.

Es ist natürlich auch möglich, daß das Gehäuseteil 793 nicht nur den oberen Teil des Mobilfunkendgerätes 5 bereichsweise abdeckt, es ist vielmehr auch möglich, daß das Mobilfunkendgerät gänzlich von dem Gehäuseteil 793 abgedeckt ist.

Wie in Fig. 7a dargestellt, weist das Gehäuseteil 793 im Bereich des Displays des Mobilfunkendgerätes 5 ein transparentes Fenster 794 auf, so daß der Display des Mobilfunkendgerätes 5 auch im eingelegten Zustand für den Betrachter sichtbar bleibt. Auf dieses transparente Fenster könnte natürlich auch verzichtet werden. Weiter wäre es auch möglich, das gesamte Gehäuseteil 793 aus einem transparenten Kunststoffmaterial herzustellen. Weiter ist es möglich, daß das Gehäuseteil 793 aus einem Kunststoff-Spritzgußteil besteht, das mit einer sehr dünnen und damit auch transparenten Metallschicht beschichtet ist.

Das Gehäuseteil 793 kann fest mit dem Gehäuseteil 791 verbunden sein, wobei das Mobilfunkendgerät 5 beim Einlegen in die von den Gehäuseteilen 793 und 791 gebildete Ausnehmung eingeführt und dann beispielsweise durch eine Kippbewegung in der Fahrzeug-Mobilfunkhalterung 79 verrastet wird.

Weiter ist es möglich, daß das Gehäuseteil 793 mit dem Gehäuseteil 791 lösbar verbunden ist. So ist es möglich, daß die Gehäuseteile 793 und 791 durch einen Verriegelungsmechanismus miteinander verbunden sind. In dem Gehäuseteil 791 gelagerte Riegel greifen beispielsweise in zugeordnete Ausnehmungen des Gehäuseteils 793 ein und stellen hierdurch eine feste mechanische Verbindung zwischen den Gehäuseteilen 791 und 793 her, sobald das Mobilfunkendgerät 5 in die Fahrzeug-Mobilfunkhalterung 79 eingelegt ist. Weiter ist es möglich, daß federnde Hakenelemente mit dem Gehäuseteil 791 verbunden sind und entsprechend hierzu angeordnete Ausnehmungen in dem Gehäuseteil 793 vorgesehen sind, mittels denen nach Einlegen des Mobilfunkendgerätes 5 das Gehäuseteil 793 mit dem Gehäuseteil 791 verrastet werden kann.

Weiter besteht die Möglichkeit, die Gehäuseteile 791 und 793 mittels ein oder mehrerer Scharniere miteinander zu verbinden, so daß das Gehäuseteil 793 nach oben oder seitlich umklappbar ist. Vorzugsweise sind hierbei an der den Scharnieren gegenüberliegenden Seite des Gehäuseteils 793 ein oder mehrere Verriegelungs- oder Verrasterungselemente vorgesehen, die eine temporäre Fixierung des Gehäuseteils 793 in der Endstellung ermöglichen.

**Patentansprüche**

1. Fahrzeug-Mobilfunkhalterung (4, 7, 75, 79) zur Befestigung eines Mobilfunkendgerätes (5) in einem Fahrzeug, wobei die Fahrzeug-Mobilfunkhalterung (4, 7, 75, 79) ein Gehäuse (41; 71; 76, 77; 791, 792, 793) mit einem zur Aufnahme des Mobilfunkendgerätes (5) ausgeformten ersten Gehäuseteil (41, 71, 76, 791), eine elektrische Schnittstelle (43, 73) zum Anschluß einer externen Antenne (6) an die Fahrzeug-Mobilfunkhalterung (4, 7, 75, 79) und eine mit der Schnittstelle (43, 73) elektrisch verbundene Koppelantenne (1; 2, 3; 78) zur berührungsfreien elektromagnetischen Kopplung von HF Signalen zwischen der Koppelantenne (1; 2, 3; 78) und der Antenne des in die Fahrzeug-Mobilfunkhalterung (4, 7, 75, 79) eingelegten Mobilfunkgeräts (5) aufweist, **dadurch gekennzeichnet, daß** die Fahrzeug-Mobilfunkhalterung (4, 7, 75, 79) weiter mindestens ein Element (61, 62; 63, 64, 65; 772) zur Reflexion von von der Antenne des in die Fahrzeug-Mobilfunkhalterung (4, 7, 75, 79) eingelegten Mobilfunkgerätes (5) abgestrahlter und nicht in die Koppelantenne (1; 2, 3; 78) eingekoppelter elektromagnetischer Strahlung auf die Koppelantenne (1; 2, 3; 78) und/oder mindestens ein Element (66, 67, 68, 69) zur Absorption dieser elektromagnetischen Strahlung aufweist, wobei dieses Element (66, 67, 68, 69) aus einem elektromagnetische Strahlung absorbierenden Schaumstoff besteht, der vom eingelegten Mobilfunkendgerät (5) aus betrachtet unterhalb der Koppelantenne (1; 2, 3; 78) und/oder seitlich der Koppelantenne angeordnet ist.

2. Fahrzeug-Mobilfunkhalterung nach Anspruch 1,
   **dadurch gekennzeichnet,**
   **daß** das Element (62, 64) aus einer vom eingelegten Mobilfunkendgerät (5) aus betrachtet unterhalb der Koppelantenne (1; 2, 3) angeordneten leitfähigen Schicht besteht.

3. Fahrzeug-Mobilfunkhalterung nach Anspruch 2,
   **dadurch gekennzeichnet,**
   **daß** die leitfähige Schicht vollflächig mindestens den Bedeckungsbereich der Koppelantenne (1; 2, 3) abdeckt.

4. Fahrzeug-Mobilfunkhalterung nach Anspruch 2 oder 3,
   **dadurch gekennzeichnet,**
   **daß** die leitfähige Schicht im wesentlichen senkrecht zur Hauptabstrahlrichtung der Antenne des eingelegten Mobilfunkendgeräts (5) ausgerichtet ist.

5. Fahrzeug-Mobilfunkhalterung nach einem der Ansprüche 1 bis 4,
   **dadurch gekennzeichnet,**
   **daß** das Element (61, 63, 65) aus einer seitlich der Koppelantenne (1; 2, 3) angeordneten leitfähigen Schicht besteht.

6. Fahrzeug-Mobilfunkhalterung nach einem der vorgehenden Ansprüche,
   **dadurch gekennzeichnet,**
   **daß** das Gehäuse (76, 77) der Fahrzeug-Mobilfunkhalterung (75) ein zweites Gehäuseteil (77) aufweist, daß die dem eingelegten Mobilfunkendgerät (5) abgekehrte Seite des Gehäuses (76, 77) der Fahrzeug-Mobilfunkhalterung (75) bildet und daß dieses zweite Gehäuseteil (77) mit einer elektrisch leitfähigen Schicht (772) beschichtet ist oder aus einem elektrisch leitfähigen Kunststoff besteht.

7. Fahrzeug-Mobilfunkhalterung (79) nach einem der vorgehenden Ansprüche,
   **dadurch gekennzeichnet,**
   **daß** das Gehäuse der Fahrzeug-Mobilfunkhalterung (79) ein drittes Gehäuseteil (793) aufweist, daß das eingelegte Mobilfunkendgerät (5) zusammen mit dem ersten Gehäuseteil (791) zumindest teilweise umschließt, und daß dieses dritte Gehäuseteil (793) mit einer elektrisch leitfähigen Schicht beschichtet ist oder aus einem elektrisch leitfähigen Kunststoff besteht.

8. Fahrzeug-Mobilfunkhalterung nach Anspruch 7,
   **dadurch gekennzeichnet,**
   **daß** das dritte Gehäuseteil (793) ablösbar mit dem ersten Gehäuseteil (791) verbunden ist, insbesondere mittels eines Verriegelungsmechanismuses, mittels Verrastung oder mittels Scharnieren mit dem ersten Gehäuseteil (791) verbunden ist.

9. Fahrzeug-Mobilfunkhalterung nach Anspruch 1,
   **dadurch gekennzeichnet,**
   **daß** die Absorberstrukturen (66, 67, 68, 69) im wesentlichen senkrecht zur Hauptabstrahlrichtung der Antenne des eingelegten Mobilfunkendgerätes (5) ausgerichtet sind.

10. Fahrzeug-Mobilfunkhalterung nach einem der Ansprüche 1 oder 9,
**dadurch gekennzeichnet,**
**daß** das Gehäuse der Fahrzeug-Mobilfunkhalterung (79) ein zweites Gehäuseteil (792) aufweist, daß die dem eingelegten Mobilfunkendgerät (5) abgekehrte Seite des Gehäuses der Fahrzeug-Mobilfunkhalterung (79) bildet, und daß dieses zweite Gehäuseteil (792) mindestens partiell mit einem Absorberstrukturen aufweisenden Schichtverbund versehen ist.

11. Fahrzeug-Mobilfunkhalterung nach einem der vorgehenden Ansprüche,
**dadurch gekennzeichnet,**
**daß** das Gehäuse der Fahrzeug-Mobilfunkhalterung (79) ein drittes Gehäuseteil (793) aufweist, das das eingelegte Mobilfunkendgerät (5) zusammen mit dem ersten Gehäuseil (791) zumindest teilweise umschließt, und daß das dritte Gehäuseteil (793) mindestens partiell mit einem Absorberstrukturen aufweisenden Schichtverbund versehen ist.

12. Fahrzeug-Mobilfunkhalterung nach einem der vorgehenden Ansprüche,
**dadurch gekennzeichnet,**
**daß** die Koppelantenne (1; 2, 3) im wesentlichen senkrecht zur Hauptabstrahlrichtung der Antenne des eingelegten Mobilfunkgeräts (5) ausgerichtet ist.

13. Fahrzeug-Mobilfunkhalterung nach einem der vorgehenden Ansprüche,
**dadurch gekennzeichnet,**
**daß** die Koppelantenne (1; 2, 3) im wesentlichen parallel zueinander angeordnete und miteinander verkoppelte Leiter aufweist, wobei die beiden äußeren Leiter zu einer nicht ganz geschlossenen Schleife aus leitendem Material verbunden sind, die den mittleren Leiter umschließt.

14. Fahrzeug-Mobilfunkhalterung nach einem der Ansprüche 1 bis 12,
**dadurch gekennzeichnet,**
**daß** die Koppelantenne (2, 3) als zwei- oder mehrlagige Koppelstruktur mit zwei oder mehr übereinander angeordneten Teil-Koppelstrukturen (2, 3) ausgeformt ist.

**Claims**

1. A car holder (4, 7, 75, 79) for mobile telephones that serves for mounting a mobile communications terminal (5) in a car, wherein the car holder (4, 7, 75, 79) for mobile telephones features a housing (41; 71; 76, 77; 791, 792, 793) with a first housing part (41, 71, 76, 791) shaped for receiving the mobile communications terminal (5), an electric interface (43, 73) for connecting an external antenna (6) to the car holder (4, 7, 75, 79) for mobile telephones and a coupling antenna (1; 2, 3; 78) that is electrically connected to the interface (43, 73) and serves for the contactless electromagnetic coupling of HF signals between the coupling antenna (1; 2, 3; 78) and the antenna of the mobile communications terminal (5) inserted into the car holder (4, 7, 75, 79) for mobile telephones, **characterized in that** the car holder (4, 7, 75, 79) for mobile telephones furthermore features at least one element (61, 62; 63, 64, 65; 772) for reflecting to the coupling antenna (1; 2, 3; 78) electromagnetic radiation that is emitted by the antenna of the mobile communications terminal (5) inserted into the car holder (4, 7, 75, 79) for mobile telephones and not coupled into the coupling antenna (1; 2, 3; 78) and/or at least one element (66, 67, 68, 69) for absorbing this electromagnetic radiation, wherein this element (66, 67, 68, 69) consists of a foamed material that absorbs electromagnetic radiation and is arranged underneath the coupling antenna (1; 2, 3; 78) and/or laterally of the coupling antenna viewed from the inserted mobile communications terminal (5).

2. The car holder for mobile telephones according to Claim 1,
**characterized in**
**that** the element (62, 64) consists of a conductive layer that is arranged underneath the coupling antenna (1; 2, 3) viewed from the inserted mobile communications terminal (5).

3. The car holder for mobile telephones according to Claim 2,
**characterized in**
**that** the conductive layer completely covers at least the coverage area of the coupling antenna (1; 2, 3).

4. The car holder for mobile telephones according to Claim 2 or 3,
**characterized in**
**that** the conductive layer is essentially aligned perpendicular to the principal radiating direction of the antenna of the inserted mobile communications terminal (5).

5. The car holder for mobile telephones according to one of Claims 1 to 4,
**characterized in**
**that** the element (61, 63, 65) consists of a conductive layer that is arranged laterally of the coupling antenna (1; 2, 3).

6. The car holder for mobile telephones according to one of the preceding claims,
**characterized in**
**that** the housing (76, 77) of the car holder (75) for mobile telephones features a second housing part (77) that forms the side of the housing (76, 77) of the car holder (75) for mobile telephones which faces away from the inserted mobile communications terminal (5), and in that this second housing part (77) is coated with an electrically conductive layer (772) or consists of an electrically conductive plastic material.

7. The car holder (79) for mobile telephones according to one of the preceding claims,
**characterized in**
**that** the housing of the car holder (79) for mobile telephones features a third housing part (793) that at least partially encompasses the inserted mobile communications terminal (5) together with the first housing part (791), and in that this third housing part (793) is coated with an electrically conductive layer or consists of an electrically conductive plastic material.

8. The car holder for mobile telephones according to Claim 7,
**characterized in**
**that** the third housing part (793) is detachably connected to the first housing part (791), particularly connected to the first housing part (791) by means of an interlocking mechanism, by means of a snap-in locking mechanism or by means of hinges.

9. The car holder for mobile telephones according to Claim 1,
**characterized in**
**that** the absorber structures (66, 67, 68, 69) are essentially aligned perpendicular to the principal radiating direction of the antenna of the inserted mobile communications terminal (5).

10. The car holder for mobile telephones according to one of Claims 1 or 9,
**characterized in**
**that** the housing of the car holder (79) for mobile telephones features a second housing part (792) that forms the side of the housing of the car holder (79) for mobile telephones which faces away from the inserted mobile communications terminal (5), and in that this second housing part (792) is at least partially provided with a laminar structure featuring absorber structures.

11. The car holder for mobile telephones according to one of the preceding claims,
**characterized in**
**that** the housing of the car holder (79) for mobile telephones features a third housing part (793) that at least partially encompasses the inserted mobile communications terminal (5) together with the first housing part (791), and in that the third housing part (793) is at least partially provided with a laminar structure featuring absorber structures.

12. The car holder for mobile telephones according to one of the preceding claims,
**characterized in**
**that** the coupling antenna (1; 2, 3) is essentially aligned perpendicular to the principal radiating direction of the antenna of the inserted mobile communications terminal (5).

13. The car holder for mobile telephones according to one of the preceding claims,
**characterized in**
**that** the coupling antenna (1; 2, 3) features conductors that are essentially arranged parallel to one another and coupled to one another, wherein the two outer conductors are connected into a loop of conducting material that is not completely closed and surrounds the central conductor.

**14.** The car holder for mobile telephones according to one of Claims 1 to 12,
**characterized in**
**that** the coupling antenna (2, 3) is realized in the form of a two-layer or multilayer coupling structure with two or more partial coupling structures (2, 3) that are arranged on top of one another.

**Revendications**

**1.** Support de téléphonie mobile de véhicule (4, 7, 75, 79) pour la fixation d'un terminal de téléphonie mobile (5) dans un véhicule, le support de téléphonie mobile de véhicule (4, 7, 75, 79) présentant un boîtier (41 ; 71 ; 76, 77 ; 791, 792, 793) avec une première partie de boîtier (41 ; 71 ; 76, 77 ; 791) formée pour recevoir le terminal de téléphonie mobile (5), une interface (43, 73) électrique pour le raccordement d'une antenne (6) externe au support de téléphonie mobile de véhicule (4, 7, 75, 79) et une antenne de couplage (1 ; 2, 3 ; 78) reliée électriquement à l'interface (43, 73) pour le couplage électromagnétique et sans contact de signaux HF entre l'antenne de couplage (1 ; 2, 3 ; 78) et l'antenne du terminal de téléphonie mobile (5) inséré dans le support de téléphonie mobile de véhicule (4, 7, 75, 79), **caractérisé en ce que** le support de téléphonie mobile de véhicule (4, 7, 75, 79) présente également au moins un élément (61, 62 ; 63, 64, 65 ; 772) pour la réflexion du rayonnement électromagnétique diffusé par l'antenne du terminal de téléphonie mobile (5) insérée dans le support de téléphonie mobile de véhicule (4, 7, 75, 79) et du rayonnement électromagnétique non injecté dans l'antenne de couplage (1 ; 2, 3 ; 78) sur l'antenne de couplage (1 ; 2, 3 ; 78) et/ou au moins un élément (66, 67, 68, 69) pour l'absorption de ce rayonnement électromagnétique, cet élément (66, 67, 68, 69) étant à base d'une mousse absorbant du rayonnement électromagnétique, qui est disposée, vue depuis le terminal de téléphonie mobile (5) inséré, au-dessous de l'antenne de couplage (1 ; 2, 3 ; 78) et/ou sur le côté de l'antenne de couplage.

**2.** Support de téléphonie mobile de véhicule selon la revendication 1,
**caractérisé en ce que**
l'élément (62, 64) est constitué d'une couche conductible, disposée au-dessous de l'antenne de couplage (1 ; 2, 3), vue depuis le terminal de téléphonie mobile (5) inséré.

**3.** Support de téléphonie mobile de véhicule selon la revendication 2,
**caractérisé en ce que**
la couche conductible recouvre sur toute la surface au moins la zone de recouvrement de l'antenne de couplage (1 ; 2, 3).

**4.** Support de téléphonie mobile de véhicule selon la revendication 2 ou 3,
**caractérisé en ce que**
la couche conductible est orientée sensiblement perpendiculairement à la direction principale de rayonnement de l'antenne du terminal de téléphonie mobile (5) inséré.

**5.** Support de téléphonie mobile de véhicule selon l'une quelconque des revendications 1 à 4,
**caractérisé en ce que**
l'élément (61, 63, 65) est constitué d'une couche conductible disposée sur le côté de l'antenne de couplage (1 ; 2, 3).

**6.** Support de téléphonie mobile de véhicule selon l'une quelconque des revendications précédentes,
**caractérisé en ce que**
le boîtier (76, 77) du support de téléphonie mobile de véhicule (75) présente une seconde partie de boîtier (77), qui forme le côté, opposé au terminal de téléphonie mobile (5) inséré, du boîtier (76, 77) du support de téléphonie mobile de véhicule (75) et **en ce que** cette seconde partie de boîtier (77) est recouverte d'une couche (772) électroconductrice ou est à base d'un plastique électroconducteur.

**7.** Support de téléphonie mobile de véhicule (79) selon l'une quelconque des revendications précédentes,
**caractérisé en ce que**
le boîtier du support de téléphonie mobile de véhicule (79) présente une troisième partie de boîtier (793), qui entoure au moins partiellement le terminal de téléphonie mobile (5) inséré conjointement avec la première partie de boîtier (791) et **en ce que** cette troisième partie de boîtier (793) est recouverte d'une couche électroconductrice ou est à base d'un plastique électroconducteur.

**8.** Support de téléphonie mobile de véhicule selon la revendication 7,

**caractérisé en ce que**
la troisième partie de boîtier (793) est reliée de façon amovible avec la première partie de boîtier (791), est reliée en particulier au moyen d'un mécanisme de verrouillage, au moins par encliquetage ou au moyen de charnières avec la première partie de boîtier (791).

9. Support de téléphonie mobile de véhicule selon la revendication 1,
**caractérisé en ce que**
les structures d'absorbeur (66, 67, 68, 69) sont orientées sensiblement perpendiculairement à la direction principale de rayonnement de l'antenne du terminal de téléphonie mobile (5) inséré.

10. Support de téléphonie mobile de véhicule selon l'une quelconque des revendications 1 ou 9,
**caractérisé en ce que**
le boîtier du support de téléphonie mobile de véhicule (79) présente une seconde partie de boîtier (792) qui forme le côté, opposé au terminal de téléphonie mobile (5) inséré, du boîtier du support de téléphonie mobile de véhicule (79) et **en ce que** cette seconde partie de boîtier (792) est dotée au moins partiellement d'un ensemble de couche présentant des structures d'absorbeur.

11. Support de téléphonie mobile de véhicule selon l'une quelconque des revendications précédentes,
**caractérisé en ce que**
le boîtier du support de téléphonie mobile de véhicule (79) présente une troisième partie de boîtier (793) qui entoure au moins partiellement le terminal de téléphonie mobile (5) inséré conjointement avec la première partie de boîtier (791) et **en ce que** la troisième partie de boîtier (793) est dotée au moins partiellement d'un ensemble de couche présentant des structures d'absorbeur.

12. Support de téléphonie mobile de véhicule selon l'une quelconque des revendications précédentes,
**caractérisé en ce que**
l'antenne de couplage (1 ; 2, 3) est orientée sensiblement perpendiculairement à la direction principale de rayonnement de l'antenne du terminal de téléphonie mobile (5) inséré.

13. Support de téléphonie mobile de véhicule selon l'une quelconque des revendications précédentes,
**caractérisé en ce que**
l'antenne de couplage (1 ; 2, 3) présente des conducteurs disposés sensiblement parallèlement entre eux et couplés les uns avec les autres, les deux connecteurs extérieurs étant reliés pour former une boucle non complètement fermée à base de matériau conducteur, qui entoure le conducteur central.

14. Support de téléphonie mobile de véhicule selon l'une quelconque des revendications 1 à 12,
**caractérisé en ce que**
l'antenne de couplage (2, 3) est formée sous forme de structure de couplage à deux couches ou multicouches avec deux ou plus de deux structures de couplage partielles (2, 3) disposées les unes au-dessus des autres.

Fig. 1

Fig. 2a

Fig. 2b

Fig.3

Fig. 4a

Fig. 4b

Fig.4c

Fig. 5

665   667   666

661

662                                                    66

663

664

Fig. 6a

677   679   678

671                                                    674

672                                                    67
                                                       675

673                                                    676

Fig. 6b

685   686

687                                                    683

                                                       68
687

682                                                    684

Fig. 6c

Fig.6d

791 — 79

793 — 794

5

Fig. 7a

5 — 793 — 79

791 — 792 — 97

Fig. 7b

**EP 1 616 366 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10037241 A1
- DE 29724042 U1
- WO 9825323 A